# FASCICULE DE BREVET EUROPEEN

(11) **EP 0 630 687 B1**
(45) Date de publication et mention de la délivrance du brevet: **16.07.1997**
(21) Numéro de dépôt: 94870094.3
(22) Date de dépôt: 09.06.1994
(51) Int. Cl.: B03B 9/04, B09B 3/00, C04B 18/04

(54) **Procédé de traitement de résidus d'installations d'incineration d'immondices ménagères et similaires**
Verfahren zur Aufbereitung von Rückständen aus Hausmüllverbrennungsanlagen und ähnlichen Rückständen
Method of treating residues from incineration plants for household waste and similar residues

(30) Priorité: 28.06.1993 BE 9300665
(43) Date de publication de la demande: 28.12.1994
(73) Titulaire: SIPAC S.A., 1600 Sint-Pieters-Leeuw (BE)
(72) Inventeur: de la Roche, Serge, Dr. sc., B-1180 Bruxelles (BE)
(74) Mandataire: Van Malderen, Joelle

(56) Documents cités:
- EP-A- 0 362 125
- WO-A-92/15536
- DE-A- 3 717 506
- US-A- 4 487 616
- DATABASE WPI Section Ch, Week 8251, Derwent Publications Ltd., London, GB; Class D04, AN 82-10376J/51 & JP-A-57 184 489 (ASAHI GLASS KK) 13 Novembre 1982
- DATABASE WPI Section Ch, Week 8151, Derwent Publications Ltd., London, GB; Class E31, AN 81-94362D/51 & SU-A-812 716 (MANDRYKA) 15 Mars 1981

## Description

### Objet de l'invention

La présente invention concerne un procédé de traitement de résidus d'installations d'incinération, notamment d'immondices ménagères et similaires.

L'invention s'adresse plus particulièrement à une technique d'élimination et de fixation des sels solubles, tels que le chlorure de calcium, présents dans les cendres volantes et dans les résidus de neutralisation des gaz d'incinération.

Elle concerne également l'utilisation des solutions riches en chlorure de calcium obtenues.

### Arrière-plan technologique et état de la technique

Les gaz provenant de l'incinération des immondices ménagères contiennent des poussières et des gaz acides comme l'acide chlorhydrique et l'acide sulfurique.

Le traitement s'effectue classiquement en deux étapes, tout d'abord un traitement des poussières qui sont séparées à l'aide d'électrofiltres et ensuite la neutralisation des acides par une base.

Diverses techniques existent pour la neutralisation des acides; elles sont surtout constituées par les traitements humides, semi-secs ou secs impliquant essentiellement la mise en oeuvre d'oxyde ou d'hydroxyde de calcium.

Il en résulte nécessairement la présence de concentrations assez élevées de chlorure de calcium dans les résidus de telles installations de neutralisation.

Une analyse typique des cendres d'électrofiltres est la suivante:

| | g/kg |
|---|---|
| SiO₂ | 280 |
| Ca | 130 |
| Al | 75 |
| Cl | 45 |
| S | 23 |
| So₄ | 77 |
| K | 18 |
| Zn | 22 |
| Fe | 27 |
| Na | 16 |
| Mg | 18 |
| Pb | 7 |
| Sn | 5 |
| Cu | 1 |
| C | 21 |
| CO₃ | 15 |

Une analyse typique des résidus de neutralisation des fumées par traitent sec est la suivante:

| | g/kg |
|---|---|
| Ca | 250 |
| Cl | 140 |
| K | 32 |
| S | 54 |
| Al | 22 |
| Na | 22 |
| Zn | 17 |
| C | 9 |
| Pb | 7 |
| Mg | 7 |
| FE | 6 |
| C | 3 |
| Ba | 1 |
| Mn | 1 |
| Cu | 0,7 |
| Sn | 0,5 |
| Cd | 0,3 |
| Ni | 0,1 |

Ces deux résidus sont généralement considérés comme toxiques du fait que, mis en décharge, on assiste au cours du temps à une libération des métaux lourds et des sels solubles.

Jusqu'à présent, ces résidus étaient souvent traités par solidification pour fixer les métaux lourds. Dans de nombreux pays, les législations récentes n'autorisant plus le rejet des sels solubles et limitent en particulier la teneur en chlorure des eaux rejetées. Il est donc habituel de fixer chimiquement les sels solubles. A cet effet, on utilise généralement un liant hydraulique contenant des quantités élevées d'aluminium. Les produits mis en oeuvre sont généralement des ciments alumineux. Des ciments de ce types ont été décrits Ind. Chim. Belg. 39 (1974), p. 687-692.

On connaît par le document EP-A-0 362 125, un procédé visant à fixer les métaux lourds des résidus solides d'installations d'incinération.

On procède successivement à une lixiviation l'aide d'eau ou d'un milieu acide.

La solution obtenue est ensuite neutralisée par de l'hydroxyde de calcium ou de sodium à un pH de 7,5 à 8,5 et l'on provoque la précipitation de ces métaux lourds dans un réacteur de floculation.

Cette technique ne convient pas pour traiter des résidus dont l'essentiel des constituants solubles est formé par le chlorure de calcium.

L'inconvénient de la fixation chimique par des liants hydrauliques est l'utilisation de quantités considérables de réactifs.

Ces réactifs sont chers et bien entendu, résultent en la formation des masses considérables de résidus encombrants.

Le document DE-A-3 717 506 décrit la lixiviation de résidus constitués de cendres volantes. L'eau résiduaire est neutralisée et ensuite évaporée pour précipiter les métaux lourds ou soumis à une osmose inverse.

Le document WO92/15536 décrit une technique de traitement de résidus toxiques à l'aide d'un liant hydraulique.

Le document Database WP5 AN:82-10376j/51 décrit une technique de traitement des eaux résiduaires par addition d'additifs constitués par des sels solubles de fer, aluminium, magnésium et/ou calcium.

Dans les techniques précitées, on n'obtient pas de produits valorisables et la technique est onéreuse et/ou consommatrice des réactifs.

### Buts de la présente invention

Tenant compte des législations nationales européennes de plus en plus sévères en matière de rejet de chlorures, l'invention vise à fournir un procédé amélioré de traitement des résidus des installations d'incinération du type mentionné qui soit d'un coût réduit, qui ne consomme pas de réactifs onéreux, qui n'entraîne pas la formation de résidus importants et qui fournit un produit valorisable dans d'autres secteurs techniques, notamment pour l'épuration des eaux.

### Principaux éléments caractéristiques du procédé selon l'invention

L'invention porte essentiellement sur un procédé de traitement de résidus provenant d'effluents d'installations d'incinération d'immondices ménagères et similaires, en particulier des cendres dites volantes provenant du traitement d'électrofiltration et/ou des résidus de neutralisation des fumées par traitement à la chaux caractérisé en ce qu'on procède à une lixiviation des résidus à l'aide d'une solution recyclée contenant des sels solubles en produisant une suspension qui est soumise à une filtration et à un lavage à l'aide d'eau d'adduction en séparant à l'aide d'un filtre d'une part une solution contenant la majorité des sels solubles et principalement du chlorure de calcium et d'autre part un gâteau de filtration débarrassé en grande partie des sels solubles, les eaux de lavage étant recyclées en continu tout en prélevant une purge concentrée en sels solubles.

De préférence, les conditions de lavage, en particulier l'adduction d'eau et la purge sont réalisées de manière à obtenir des concentrations en sels solubles (essentiellement CaCl₂, NaCl et KCl) de l'ordre de 150 à 400 g/litre à la purge.

Le plus souvent, les résidus de neutralisation des fumées sont difficilement filtrables; il peut cependant exister des exceptions.

Pour améliorer la filtrabilité, on ajoute de préférence au minimum 20% de cendres volantes. Il est intéressant d'ajouter une quantité maximale de cendres volantes jusqu'à 200% des résidus de neutralisation. Il existe cependant une limite pratique, une solution recyclée contenant 300 g/l de CaCl₂ ne pouvant pas contenir plus de 15 g/l de sodium.. Or les résidus de neutralisation sont riches en CaCl₂ et pauvres en sodium, et la cendre volante contient ± 50% de calcium et ± 50% de sodium. L'usage de la quantité de cendres volantes est donc limité par la composition de la solution finale souhaitée (rapport calcium / sodium).

Généralement, la composition des matières de départ est formée par un mélange de cendres volantes et de résidus de neutralisation contenant de 8 à 36% de sels solubles.

Le gâteau de filtration ne peut généralement être rejeté tel quel et pour se conformer aux exigences légales, les sels solubles sont généralement fixés chimiquement selon la technique décrite dans BE-831427, par adjonction de faibles quantités de réactif du type liant hydraulique, en particulier le ciment alumineux précité, comparé à ce qui aurait exigé un traitement direct sans lavage selon l'invention.

L'invention sera décrite plus en détail ci-après en référence à un mode d'exécution particulièrement préféré de l'invention.

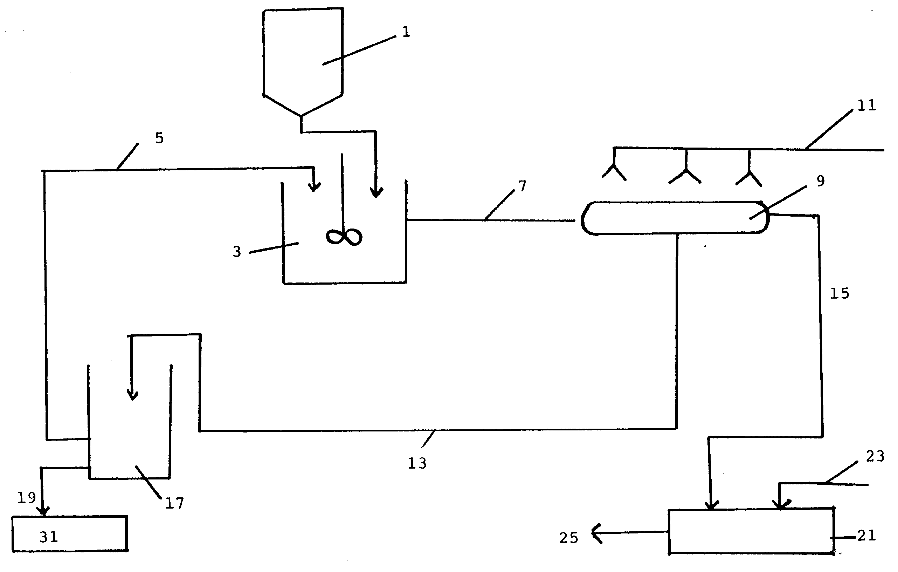

### Brève description du dessin

Dans la figure unique annexée, on a représenté schématiquement une installation permettant la mise en oeuvre du procédé de l'invention.

Ainsi que représenté à l'unique figure annexée, les matières 1 provenant d'installations d'incinération d'immondices ménagères et similaires telles des cendres volantes ou des résidus de neutralisation sont lixiviées dans un réacteur de lixiviation 3 en y ajoutant une solution recyclée 5 contenant des sels solubles. La suspension obtenue 7 est ensuite envoyée sur un filtre 9, de préférence un filtre à bande équipé d'un système de lavage 11 relié à une adduction d'eau. On effectue la séparation au filtre à bande 9 en séparant d'une part une solution 13 contenant essentiellement du chlorure de calcium et autres sels solubles et d'autre part un gâteau de filtration 15.

La solution 13 contenant les sels solubles est envoyée ensuite vers un réservoir-tampon 17 d'où est prélevée par une purge 19 la solution concentrée en sels solubles. Une partie 5 de cette solution est également recyclée vers le réacteur de lixiviation 3.

Toute l'eau entrant dans le système y est introduit par la rampe de lavage 11 tandis que l'eau sortant du système se retrouve soit dans les boues 15 soit dans la solution concentrée 19 contenant les sels solubles.

Il convient de noter que la concentration de la solution concentrée 19 en sels solubles doit avantageusement être comprise entre 150 et 400 g/litre à la purge.

Les solutions commerciales doivent en fait avoir une concentration supérieure à 300 g/l. En effet, il n'est pas rentable de stocker et de transporter des solutions diluées.

En pratique, il est cependant difficile de dépasser 330 g/l CaCl₂. La raison en est que de l'eau neuve est introduite lors du rinçage du gâteau. Si l'on introduit trop d'eau, la solution finale aura une concentration inférieure à 300 g/l. Si l'on introduit trop peu d'eau, la grande partie du CaCl₂ restera dans le gâteau de filtration.

Le gâteau 15 provenant du filtre 9 à bande ou de tout autre type de filtre permettant un lavage, peut contenir entre 1 et 25% de la quantité de sels solubles contenus initialement dans les matières à traiter 1. Ces sels solubles peuvent être ultérieurement fixés chimiquement lors d'un traitement par immobilisation 21.

Le fait d'éliminer par lavage plus de 75% des sels solubles permet une économie très importante des réactifs 23 à utiliser lors du traitement d'immobilisation 21.

La solution 19 issue de la purge et résultant du procédé à une valeur commerciale non négligeable et peut être ré-utilisée pour un traitement ultérieur 31.

A titre d'illustration des utilisations envisageables, ces solutions peuvent convenir comme anti-poussières, comme fluides dans des circuits de refroidissement, comme adjuvants dans les bétons.

Une application particulièrement intéressante consiste à traiter des eaux usées, en particulier différents effluents urbains à l'aide d'une telle solution concentrée de CaCl₂ en vue d'éliminer les ions sulfate et phosphate des eaux usées par précipitation sous forme de sels calciques correspondants.

On peut prélever et utiliser en continu ou en discontinu la solution concentrée 19 provenant du procédé de l'invention en vue du traitement de ce type d'eaux résiduaires.

La présente invention est décrite ci-dessous à l'aide de deux exemples qui illustrent plus particulièrement l'intérêt principal du procédé décrit en comparaison avec les résultats obtenus selon l'art antérieur.

Ces deux exemples sont relatifs au traitement complet de matières provenant d'effluents d'installations d'incinération par exemple.

### Exemple 1 (exemple comparatif selon l'état de la technique)

Cet exemple décrit un procédé selon l'état de la technique et est mentionné à titre de comparaison avec un procédé selon l'invention décrit à l'exemple 2.

Selon l'état de la technique, le produit à mettre à la décharge contient tout le chlorure de calcium. De ce fait, on utilise habituellement la composition suivante pour solidifier le gâteau, à savoir: 1000 kg de cendres + 1000 kg de réactif + 1150 kg d'eau, soit un total de 3150 kg de boue à mettre à la décharge.

### Exemple 2

Pour décrire cet exemple de mise en oeuvre d'un procédé selon l'invention, on se réfère à la figure annexée.

1000 kg de résidus 1 provenant d'installations d'incinération sont lixiviés avec 1500 kg d'une solution 5 contenant des sels solubles dans un réacteur de lixiviation 3. La suspension obtenue 7 est alors filtrée sur un filtre 9 et à laquelle par la rampe 11 on ajoute 1300 kg d'eau destinée au lavage. Le gâteau de filtration 15 issu de la séparation au filtre 9 est envoyé vers un mélangeur de solidification 21 où l'on ajoute 160 kg de liant hydraulique 23. Le produit solidifié 25 obtenu de 1390 kg est envoyé à la décharge. La solution 13 contenant essentiellement les sels solubles est envoyée vers un bassin tampon d'où on extrait une solution concentrée 19 contenant 350 g/litre de chlorure de calcium, de sodium ou de potassium. Cette solution concentrée 19 peut être utilisée lors de procédés de recyclage ultérieurs 31. L'autre partie 5 de la solution est recyclée vers le réacteur de lixiviation 3.

La comparaison entre les deux exemples mentionnés précédemment montre que:
- en ce qui concerne la consommation en eau, l'eau introduite dans le système est uniquement celle utilisée lors du lavage et est estimée à 1300 kg d'eau selon le procédé de l'invention tandis que si l'on effectue le procédé sans cette opération de lavage, il est nécessaire d'introduire 1150 kg d'eau à l'étape de solidification; par conséquent on peut estimer une consommation de 10% supérieure pour le procédé selon l'invention comparée à la consommation pour un procédé de l'art antérieur.
- dans le cas d'un procédé selon l'invention, la solution concentrée contenant le chlorure peut être vendue ou recyclée.
- pour ce qui concerne la mise en décharge des boues, celles-ci sont de l'ordre de 1390 kg dans le cas du procédé selon l'invention et de 3150 kg pour le procédé selon l'état de l'art.
- la consommation en réactif pour un procédé selon l'état de l'art est de 1 tonne pour 1 tonne de résidus à traiter et seulement de 160 kg pour une 1 tonne de résidus selon le procédé de l'invention.

Par conséquent, au vu de ce qui est dit ci-dessus, on démontre aisément les qualités et avantages du procédé selon la présente invention par rapport à un procédé de traitement classique.

Bien qu'on ait décrit des formes d'exécution préférées de l'invention, celles-ci ne l'ont été qu'à titre d'illustration et sans caractère limitatif.

## Revendications

1. Procédé de traitement de résidus (1) contenant du chlorure de calcium provenant d'effluents d'installations d'incinération d'immondices ménagères et similaires,en particulier des cendres dites volantes provenant du traitement d'électrofiltration et/ou des résidus de neutralisation des fumées par traitement à la chaux caractérisé en ce qu'on procède à une lixiviation (3) des résidus (1) à l'aide d'une solution recyclée (5) contenant des sels solubles en produisant une suspension (7) qui est soumise à une filtration et à un lavage à l'aide d'eau d'adduction (11) en séparant à l'aide d'un filtre (9) d'une part une solution (13) contenant la majorité des sels solubles et principalement le chlorure de calcium et d'autre part un gâteau de filtration (15) débarrassé en grande partie des sels solubles, les eaux de lavage (11) étant recyclées en continu tout en prélevant une purge (19) concentrée en sels solubles.

2. Procédé de traitement selon la revendication 1 caractérisé en que la concentration des sels solubles et en particulier en chlorure de calcium, de sodium et de potassium est comprise entre 150 et 400 g/litre à la purge (19).

3. Procédé de traitement selon la revendication 1 ou 2 caractérisé en ce que la composition des matières (1) de départ est formée par un mélange de cendres volantes et de résidus de neutralisation contenant de 8 à 36% de sels solubles.

4. Procédé de filtration selon l'une quelconque des revendications précédentes caractérisé en ce que les sels solubles dans le gâteau de filtration (15) sont fixés chimiquement par adjonction d'un liant hydraulique et en particulier du ciment alumineux.

5. Utilisation de la solution riche en chlorure de calcium provenant du procédé selon l'une quelconque des revendications précédentes en vue de précipiter les sulfates et les phosphates dans les eaux usées.

6. Utilisation de la solution riche en chlorure de calcium provenant du procédé selon l'une quelconque des revendications 1 à 4 comme anti-poussières, comme fluide dans des circuits de refroidissement, comme adjuvant dans les bétons.

## Claims

1. Process for processing residues (1) containing calcium chloride from incinerator effluents for household refuse and similar, particularly the so-called fly ashes from an electrofiltration process, and/or residues for fume neutralization by lime treatment, characterized in that a residue (1) lixiviation step (3) is carried out through a recycled solution (5) containing soluble salts by producing a suspension (7) which is submitted to a filtration and a washing with water supply (11) by separating through a filter (9), on one hand, a solution (13) containing most of the soluble salts and mainly the calcium chloride and, on the other hand, a filtration cake (15) cleared mostly from the soluble salts, the washing waters (11) being recycled continuously while taking out a purge (19) rich in soluble salts.

2. Process for processing according to claim 1, characterized in that the concentration in soluble salts and particularly in calcium, sodium and potassium chlorides, is comprised between 150 and 400 g/l in the purge (19).

3. Process for processing according to claim 1 or 2, characterized in that the composition of starting materials (1) comprises a mixture of fly ashes and neutralization residues containing 8 to 36% soluble salts.

4. Process for filtering according to any of the preceding claims, characterized in that the soluble salts in the filtration cake (15) are fixed chemically by adding an hydraulic binder, particularly an aluminous cement.

5. Use of the calcium chloride rich solution from the process according to any of the preceding claims so as to precipitate sulfates and phosphates from the refuse waters.

6. Use of the calcium chloride rich solution from the process according to any of the claims 1 to 4 as an antidust, as a fluid in cooling circuits and as an adjuvant in concretes.

## Patentansprüche

1. Verfahren zur Behandlung von Rückständen (1), die Kalziumchlorid enthalten, und die von Abgängen von Haushaltsmüllverbrennungsanlagen und dergleichen stammen, insbesondere der sogenannten Flugasche, die von der Elektrofilterungsbehandlung stammt, und/oder der Rückstände bei der Neutralisierung der Rauchgase durch Behandlung mit Kalk, dadurch gekennzeichnet, daß eine Auslaugung (3) der Rückstände (1) mit Hilfe einer zurückgeführten Lösung (5), die lösliche Salze enthält, vorgenommen wird, wobei eine Suspension (7) hergestellt wird, die einer Filtration und einer Waschung mit Hilfe von zugeführtem Wasser (11) unterworfen wird, und mit Hilfe eines Filters (9) einerseits eine Lösung (13) abgetrennt wird, die den größten Teil der löslichen Salze und hauptsächlich das Kalziumchlorid enthält, und andererseits ein Filtrationskuchen (15) abgetrennt wird, der zu einem großen Teil von den löslichen Salzen befreit ist, wobei das Waschwasser (11) kontinuierlich zurückgeführt wird, während ein an löslichen Salzen reicher Bodensatz (19) entnommen wird.

2. Behandlungsverfahren gemäß Anspruch 1, dadurch gekennzeichnet, daß die Konzentration der löslichen Salze, insbesondere die Konzentration an Kalziumchlorid, Natriumchlorid und Kaliumchlorid, bei dem Bodensatz (19) zwischen 150 und 400 g/Liter liegt.

3. Behandlungsverfahren gemäß Anspruch 1 oder 2, dadurch gekennzeichnet, daß die Ausgangsmaterialien (1) aus einem Gemisch von Flugasche und Neutralisationsrückständen bestehen, das 8 bis 36% lösliche Salze enthält.

4. Filtrationsverfahren gemäß irgendeinem der vorhergehenden Ansprüche, dadurch gekennzeichnet, daß die löslichen Salze in dem Filtrationskuchen (15) durch Zugabe eines hydraulischen Bindemittels, insbesondere von Aluminatzement, chemisch fixiert werden.

5. Verwendung der an Kalziumchlorid reichen Lösung, die von dem Verfahren gemäß irgendeinem der vorhergehenden Ansprüche stammt, um die Sulfate und die Phosphate in den Abwässern auszufällen.

6. Verwendung der an Kalziumchlorid reichen Lösung, die von dem Verfahren gemaß irgendeinem der Ansprüche 1 bis 4 stammt, als Staubbindemittel, als Fluid in Kühlkreisen, oder als Zusatzstoff in Beton.
